Europäisches Patentamt

European Patent Office

Office européen des brevets

(11) Veröffentlichungsnummer: **0 504 573 A1**

## EUROPÄISCHE PATENTANMELDUNG

(21) Anmeldenummer: **92101957.6**

(22) Anmeldetag: **06.02.92**

(51) Int. Cl.5: **H01M 2/12**

(30) Priorität: **15.03.91 DE 4108491**

(43) Veröffentlichungstag der Anmeldung:
**23.09.92 Patentblatt 92/39**

(84) Benannte Vertragsstaaten:
**DE ES FR GB IT SE**

(71) Anmelder: **VARTA Batterie Aktiengesellschaft
Am Leineufer 51
W-3000 Hannover 21(DE)**

(72) Erfinder: **Kraft, Helmut
Am Wehr 1
W-6237 Liederbach(DE)**

(74) Vertreter: **Kaiser, Dieter Ralf, Dipl.-Ing.
Gundelhardtstrasse 72
W-6233 Kelkheim/Ts.(DE)**

(54) **Mit Zweiwegsentlastungsventil versehene wartungsfreier Bleiakkumulator.**

(57) Ein wartungsfreier Bleiakkumulator mit immobilisiertem Schwefelsäure-Elektrolyten besitzt ein Entlastungsventil, welches bei einem durch eine Feder einstellbaren Überdruck nach außen und bei einem ebenfalls durch eine Feder einstellbaren Unterdruck nach innen öffnet. Beim Entlüften wird der Ventilteller (5) gegen den Widerstand der vorgespannten Druckfeder (10) von seinem Dichtungssitz auf der Dichtlippe (9) abgehoben und ein Gasaustritt (nach oben weisende Pfeile) ermöglicht. Beim Belüften löst sich der Ventilstößel (6) gegen den Widerstand der vorgespannten Druckfeder (12) von seinem Dichtungssitz an der Gummidichtscheibe (8) im Ventilteller (5) ab und gibt der Außenluft durch Öffnung (7) im Ventilteller (5) (nach unten weisender Pfeil) den Eintritt in die Zelle frei. Das Ventil eignet sich besonders für Bleiakkumulatoren mit einem Rekombinator, der in das abgedichtete Gehäuse integriert ist.

Fig. 1

EP 0 504 573 A1

Die Erfindung betrifft einen wartungsfreien Bleiakkumulator mit immobilisiertem Schwefelsäure-Elektrolyten in einem dichten Gehäuse, welches ein unter üblichen Bedingungen geschlossenes Entlastungsventil aufweist.

Bleiakkumulatoren mit festgelegtem Elektrolyten benutzen zur Rekombination des bei Überladung entstehenden Sauerstoffs insoweit das gleiche Prinzip, das auch im gasdichten alkalischen Akkumulator Anwendung findet, indem die Zelle nur mit soviel Elektrolyt gefüllt ist, wie von den Poren des aktiven Materials und des Scheiders aufgesaugt oder in Form eines Gels zwischen den Elektroden festgehalten werden kann, und indem eine gegenüber der positiven Elektrode mit einer Überschußkapazität ausgestattete negative Elektrode, die vom Elektrolyten nur zum Teil bedeckt oder benetzt sein darf, den Gasverzehr übernimmt. Die negative Elektrode enthält dann noch einen Rest ungeladenen Materials (Ladereserve), wenn die positive Elektrode schon vollständig geladen ist und nur noch Sauerstoff erzeugt.

Diese Arbeitsweise erlaubt den Betrieb eines dicht verschlossenen Bleiakkumulators, bei dem jedoch - im Gegensatz zum gasdichten alkalischen Akkumulator, der im vollständigen Sauerstoffzyklus arbeitet - eine Wasserstoffentwicklung als Folge von Nebenreaktionen an den Elektroden oder unsachgemäßer Behandlung (z.B. Tiefentladung mit Polumkehr) nicht ausgeschlossen werden kann. Da Wasserstoff an der positiven Elektrode praktisch nicht oxidiert wird, verbietet der mit der Gasentwicklung verbundene allmähliche Druckanstieg im Innern der Zelle einen hermetisch dichten Verschluß.

Bleiakkumulatoren der eingangs angegebenen Gattung besitzen daher aus Sicherheitsgründen Ventileinrichtungen, die von Zeit zu Zeit bei Erreichen eines kritischen Innendrucks die im Akkumulator angestauten Gase freigeben.

Der DE-PS 16 71 693 beispielsweise ist ein Bleiakkumulator mit einem immobilisierten Elektrolyten und einem Ventileinsatz im Zellendeckel zu entnehmen.

Unter den Sicherheitsventilen gibt es zahlreiche Ausführungsformen. Die GB-PS 1 524 136 offenbart beispielsweise einen Ventileinsatz, bei dem zur Druckentlastung eine Membran, welche unter dem Druck einer Feder die Mündung eines Gaskanals abdichtet, im Bereich der Mündung von ihrem Dichtungssitz abgehoben werden muß, woraufhin sich dem Gas Wege nach draußen öffnen.

Aus der DE-PS 28 04 583 ist auch ein Blei-kumulator mit einem sogenannten Doppelfunktions-ventil bekannt, das nicht nur nach außen, sondern im Falle eines Unterdrucks im Gasraum auch nach innen unter Hereinlassen atmosphärischer Luft öffnet. Zu dieser Doppelfunktion ist das Ventil durch eine den Innenquerschnitt eines Belüftungsrohres überspannende Gummimembran befähigt, die einen Schlitz aufweist, so daß sich die Membran bei Druckbeaufschlagung von der einen wie von der anderen Seite lippenförmig öffnen kann.

Der Erfindung liegt die Aufgabe zugrunde, für einen Bleiakkumulator gemäß Gattungsbegriff ein Ventil anzugeben, das in seiner Funktion dem Ga-sungsverhalten von Akkumulatoren mit festgeleg-tem Elektrolyten, vorzugsweise Gel-Elektrolyten, besonders angepaßt ist und als vormontiertes Bauteil an Akkumulatorenzellen des wartungsfreien Typs problemlos angebracht werden kann.

Die Aufgabe wird erfindungsgemäß durch einen Bleiakkumulator gelöst, wie er im Patentanspruch 1 definiert ist.

Der neue Akkumulator zeichnet sich danach durch ein Ventil aus, welches sowohl bei einem vorbestimmten Überdruck in der Zelle eine Entlüftung als auch bei einem vorbestimmten Unterdruck eine Belüftung (Hereinlassen von Atmosphärenluft in die Zelle) ermöglicht, indem zum Öffnen des Ventils in der einen oder anderen Richtung jeweils eine Federkraft überwunden werden muß, die nach Maßgabe des vorbestimmten Ansprechdrucks einstellbar ist.

Wesentliche Bestandteile des Ventils gemäß der Erfindung sind somit zwei Druckfedern, von denen erstere nur bei innerem Überdruck anspricht, woraufhin sich ein unter normalen Betriebsbedingungen gesperrter Auslaß für die Akkumulatorengase öffnet, und von denen die zweite Feder nur bei Unterdruck im Zellinnern anspricht, woraufhin sich der Außenluft ein Zutritt nach innen öffnet, während der Gasauslaß unterbunden ist: Zweiwegeventil.

Aufbau und Funktionsweise des neuen Ventils gehen im einzelnen aus zwei Figurendarstellungen hervor:

Figur 1 zeigt ein Zweiwegeventil gemäß der Erfindung im Schnitt.

Figur 2 zeigt die Wirkungsweise des Zweiwegeventils bei wechselnden Druckverhältnissen im Gasraum des Akkumulators.

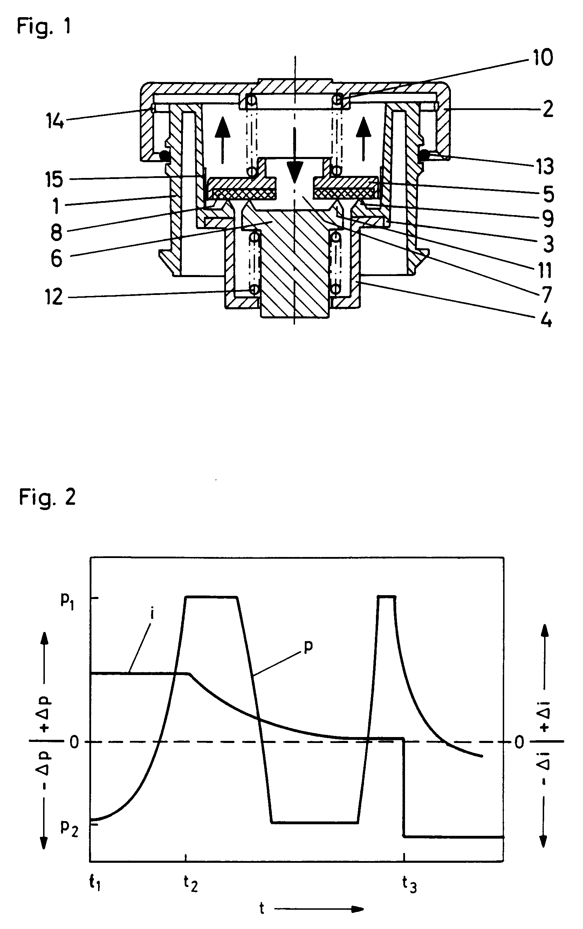

Gemäß Figur 1 sind in dem Ventilgehäuse 1 mit Ventilabschlußkappe 2 und einem durch Schnappverbindung 3 angesetzten Gehäuseunterteil 4 ein Ventilteller 5 und ein Ventilstößel 6 achsensymmetrisch und entlang der Gehäuseachse bewegbar einander zugeordnet. Der Ventilteller ist mit einer zentralen Durchlaßöffnung 7 versehen und besitzt an seiner Unterseite eine Gummidichtscheibe 8, mit der er auf einer ringförmigen Dichtlippe 9, die dem Ventilgehäuse einstückig ausgeformt ist und sich von einem Innenflansch desselben erhebt, dichtend aufsitzt. Die Dichtungspressung des Ventiltellers wird durch eine vorgespannte Druckfeder 10, die sich an der Ventilabschlußkappe abstützt, erzeugt.

Der Ventilstößel 6 verfügt an seinem Kopfende über eine ringförmige Dichtlippe 11 und liegt mit dieser kraft einer vorgespannten Druckfeder 12, welche sich an einem Innenflansch des Gehäuseunterteils 4 abstützt, an der Gummidichtscheibe 8 dichtend an.

Mit 13 ist eine O-Ring-Dichtung zum Batteriegehäuse und mit 14 eine Ringnut zum Einrasten der Ventilabschlußkappe an einer Dichtlippe des Ventilgehäuses bezeichnet. Das Zweiwegeventil wird in die Elekrolyteinfüllöffnung im Akkumulatorendeckel eingesteckt.

In dem dargestellten Zustand sind keine Gaspassagen durch die Ventilanordnung vorhanden: das Zweiwegeventil ist geschlossen.

Erhöht sich der Innendruck der Zelle um einen vorbestimmten Betrag, so bewirkt er ein Abheben des Ventiltellers 5 von seinem Dichtungssitz gegen die Kraft der Druckfeder 10, wobei der Ventilstößel 6 unter dem Einfluß der Druckfeder 12, die sich zu entspannen trachtet, dem Ventilteller 5 nachfährt. Dessen Durchlaßöffnung 7 bleibt dabei geschlossen; das Gas kann jedoch zwischen dem an Führungsnasen 15 entlanggleitenden Rand des Ventiltellers und der Gehäusewand entweichen (nach oben weisende Pfeile).

Übersteigt hingegen der atmosphärische Außendruck den Innendruck der Zelle um einen vorbestimmten Betrag, so bewirkt dieser ein Absetzen des Ventilstößelsgegen die Kraft der Druckfeder 12 und gegen die Adhäsion des Dichtgummimaterials im Ventilteller - von der Gummidichtscheibe 8. Die Durchlaßöffnung wird damit für einen Druckausgleich im Innenraum der Zelle frei (nach unten weisender Pfeil).

Ein großer Vorteil des erfindungsgemäßen Zweiwegeventils liegt darin, daß die Ansprechdrukke für das Öffnen nach außen oder nach innen nicht dem Zufall überlassen bleiben, sondern präzise einstellbar sind. Durch entsprechende Wahl des Federmaterials und des Ringdurchmessers der Dichtlippen können gewünschte Ansprechdrucke vorgegeben werden. Die Akkumulatorenzelle bleibt auf diese Weise vor Druckschwankungen, die in unzulässiger Höhe vom normalen Betriebsdruck nach oben und unten abweichen, bewahrt.

Die Kraft der auf Überdruck ansprechenden Feder 10 kann größer oder kleiner gewählt werden als die Kraft der auf Unterdruck ansprechenden Feder 12. In den meisten Fällen der Praxis wird jedoch Feder 10 die stärkere sein, weil es das Bestreben sein muß, den Ansprechdruck für die Entlastung der Zelle möglichst hoch anzusetzen, um Gas- bzw. Wasserverluste hintanzuhalten.

Ein günstiges Ventil gemäß Erfindung ist beispielsweise so eingestellt, daß es bei Überdruck im Bereich 150 mbar bis 200 mbar oberhalb Atmosphärendruck, vorzugsweise bei 120 mbar, öffnet und bei Unterdruck im Bereich 120 mbar bis 200 mbar unterhalb Atmosphärendruck, vorzugsweise bei 60 mbar, öffnet.

Besonders vorteilhaft ist die Verwendung des neuen Ventils daher bei wartungsfreien Bleiakkumulatoren vom Rekombinationstyp, d.h. Bleizellen, die durch Ausstattung mit einer Einrichtung zur katalytischen Vereinigung der Ladegase auch die Oxydation des Wasserstoffs und daher seine Rückgewinnung erlauben. Der Elektrolyt dieser Zellen ist in der Regel in einem Kieselsäure-Gel oder durch ein Vlies aus Kunststoff oder Glasfasern festgelegt.

Da wegen der Einzeleigenschaften der Elektroden Sauerstoff und Wasserstoff nicht stöchiometrisch entwickelt werden, tritt der Rekombinator immer nur während bestimmter Betriebsphasen in Funktion. Dadurch ergeben sich starke Druckschwankungen in der Zelle.

Gewöhnlich eilt während der Ladung die Sauerstoffentwicklung der Wasserstoffentwicklung voraus. Erst mit der einsetzenden Wasserstoffentwicklung kann das angestaute Sauerstoffgas am Katalysator umgesetzt werden. Die Kondensation des Rekombinationswasser hat eine Aufhebung des anfänglichen Überdrucks im Gasraum und eine anschließende Unterdruck-Phase zur Folge. Dabei wird durch das nach innen geöffnete Ventil Atmosphärenluft eingesaugt. Mit einem neuerlichen Sauerstoffüberschuß wiederholt sich der Druckwechsel.

Figur 2 macht einen solchen Druckverlauf während verschiedener Betriebsphasen bei einer Versuchszelle mit Zweiwegeventil gemäß der Erfindung deutlich.

In der schematischen Darstellung gibt Kurve i die Stärke und Richtung des Stromes in Abhängigkeit von der Zeit t wieder. Mit Kurve i korrespondiert Kurve p für den Druck, wobei sich alle Abweichungen $\Delta i$ von i = O und alle Abweichungen $\Delta p$ von p = 1000mbar (Normaldruck) auf die gleiche Null-Gerade beziehen sollen.

Wie ersichtlich, steigt der Innendruck in der Zelle während einer Ladung mit konstantem Strom i (Zeitabschnitt $t_1$ - $t_2$) infolge eines Sauerstoffvorlaufes an. Bei $t_2$ wird die Ladung durch Umschalten auf eine konstante Ladespannung bei abfallendem Strom fortgesetzt. Dabei verhindert das Zweiwegeventil, indem es beispielsweise bei $p_1$ = 1120 mbar öffnet, einen größeren Überdruck.

Gleichzeitig springt der Rekombinator auf die stöchiometrisch gewordene Gasentwicklung hin an und ruft aufgrund der Gasrekombination einen Unterdruck in der Zelle hervor. Auf diesen reagiert das Zweiwegeventil durch Öffnen nach innen, beispielsweise bei $p_2$ = 940 mbar.

Die Unterdruckphase wird von einem neuen Druckanstieg infolge Sauerstoffentwicklung durch den Reststrom abgelöst. Das Zweiwegeventil spricht wieder bei p₁ an und verhindert einen unzulässigen Überdruck.

Durch Umschalten auf Entladung bei t₃ und erneutes Anspringen des Rekombinators wird die Gasansammlung wieder abgebaut.

Die Wählbarkeit beliebiger Ansprechdrucke sowohl für das Öffnen nach außen wie für das Öffnen nach innen gibt den Einsatzmöglichkeiten des Zweiwegeventils gemäß Erfindung einen breiten Raum. Vorzugsweise läßt es sich bei Gel-Traktionszellen anwenden, die sich in einem Stahltrog befinden und somit einen höheren Überdruck zulassen.

Ebenso kann das Ventil in seinem Druckverhalten für freistehende Zellen oder Batterien ohne seitliche Wandabstützungen ausgelegt werden, so daß auch dort keine extremen Druckschwankungen die Belastbarkeit des Gehäusematerials übersteigen.

**Patentansprüche**

1.  Wartungsfreier Bleiakkumulator mit immobilisiertem Schwefelsäure-Elektrolyten in einem dichten Gehäuse, welches ein unter üblichen Bedingungen geschlossenes Entlastungsventil aufweist, dadurch gekennzeichnet, daß das Ventil ein Zweiwegeventil ist, welches entweder bei einem durch eine Feder (10) einstellbaren inneren Überdruck der Zelle nach außen öffnet oder bei einem durch eine weitere Feder (12) einstellbaren inneren Unterdruck der Zelle nach innen öffnet.

2.  Bleiakkumulator nach Anspruch 1, dadurch gekennzeichnet, daß von der auf Überdruck ansprechenden Feder (10) ein Ventilteller (5) vorgespannt ist, welcher den Austrittsweg der Gase abdichtet, daß der Ventilteller eine Durchlaßöffnung (7) besitzt, und daß von der auf Unterdruck ansprechenden Feder (12) ein Ventilstößel (6) vorgespannt ist, welcher die Durchlaßöffnung abdichtet.

3.  Bleiakkumulator nach Anspruch 2, dadurch gekennzeichnet, daß der Ventilteller (5) und der Ventilstößel (6) mit den Druckfedern (10, 12) in einem zylindrischen Ventilgehäuse (1) mit Gehäuseunterteil (4) eine zur Gehäuseachse symmetrische Anordnung bilden, bei der sich die Feder (10) an der Ventilabschlußkappe (2) und die Feder (12) an einem Innenflansch des Gehäuseunterteils abstützt.

4.  Bleiakkumulator nach Anspruch 3, dadurch gekennzeichnet, daß das Ventilgehäuse (1) einen Innenflansch mit einer auf diesem umlaufenden, nach oben weisenden Dichtlippe (9) aufweist und daß der Ventilteller (5) an seiner Unterseite mit einer Gummidichtscheibe (8) versehen ist, mit welcher er der Dichtlippe (9) dichtend aufsitzt.

5.  Bleiakkumulator nach Anspruch 4, dadurch gekennzeichnet, daß der Ventilstößel (6) mit einer an seinem Kopf umlaufenden Dichtlippe (11) der Gummidichtscheibe (8) des Ventiltellers (5) dichtend anliegt.

6.  Bleiakkumulator nach einem der Ansprüche 1 bis 5, dadurch gekennzeichnet, daß der Schwefelsäure-Elektrolyt in einem Gel oder in einem Vlies festgelegt ist.

7.  Bleiakkumulator nach einem der Ansprüche 1 bis 6, dadurch gekennzeichnet, daß in seinem Gasraum ein Rekombinator angeordnet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | GB-A-2 013 962 (VARTA BATTERIE AKTIENGESELLSCHAFT) <br> * Seite 1, Zeile 17 - Zeile 18; Ansprüche 1,5; Abbildung 1 * <br> --- | 1-5,7 | H01M2/12 |
| Y | GB-A-2 086 646 (CHLORIDE GROUP LIMITED) <br> * Seite 1, Zeile 5 - Zeile 10; Abbildungen 5,6 * <br> * Seite 2, Zeile 10 - Zeile 34 * <br> * Seite 2, Zeile 84 - Zeile 90 * <br> --- | 1-5,7 | |
| Y | DE-A-2 207 210 (F & E MANUFACTURING CO) <br> * Ansprüche 1,9,10; Abbildungen 1-3 * <br> * Seite 10, Absatz 3 - Seite 11, Absatz 1 * <br> --- | 1-5,7 | |
| A | US-A-3 201 284 (GRENVILLE B. ELLIS) <br> * Spalte 1, Zeile 8 - Zeile 21; Abbildung 3 * <br> --- | 1 | |
| A | US-A-4 561 559 (F. E. RUTAN ET ALL) <br> * Zusammenfassung; Abbildung 1 * <br> ----- | 1 | |
| | | | **RECHERCHIERTE SACHGEBIETE (Int. Cl.5)** <br><br> H01M <br> F16K |

Der vorliegende Recherchenbericht wurde für alle Patentansprüche erstellt

| Recherchenort | Abschlußdatum der Recherche | Prüfer |
|---|---|---|
| DEN HAAG | 30 JUNI 1992 | D'HONDT J.W. |